# FASCICULE DE BREVET EUROPEEN

(11) **EP 0 974 137 B1**
(45) Date de publication et mention de la délivrance du brevet: **28.11.2001**
(21) Numéro de dépôt: 98917187.1
(22) Date de dépôt: 20.03.1998
(51) Int. Cl.: G08G 1/127

(54) **PROCEDE INTERACTIF D'AIDE A LA NAVIGATION ET DISPOSITIF DE MISE EN OEUVRE**
VERFAHREN ZUR INTERAKTIVEN NAVIGATIONSHILFE UND VORRICHTUNG DAZU
INTERACTIVE PROCESS FOR USE AS A NAVIGATIONAL AID AND DEVICE FOR ITS IMPLEMENTATION

(30) Priorité: 08.04.1997 FR 9704259
(43) Date de publication de la demande: 26.01.2000
(73) Titulaire: Webraska Mobile Technologies, 78306 Poissy Cedex (FR)
(72) Inventeur: Durocher, Jean-Michel, 78100 Saint-Germain-en-Laye (FR); Sommelet, Sophie, 78100 Saint-Germain-en-Laye (FR)
(74) Mandataire: Bloch, Gérard
(86) Numéro de dépôt international: FR9800557
(87) Numéro de publication internationale: WO9845823

(56) Documents cités:
- EP-A- 0 618 531
- EP-A- 0 803 852
- DE-A- 19 535 576
- US-A- 4 954 958
- US-A- 5 311 434
- US-A- 5 508 917
- US-A- 5 543 789

## Description

L'invention concerne un système de navigation relié à un serveur centralisé, et plus particulièrement les améliorations nécessaires pour convertir un terminal (par exemple un radiotéléphone portable ou un agenda électronique) en système d'aide à la navigation, notamment pour un véhicule automobile.

Différents types de systèmes d'aide à la navigation et d'accès à de l'information ont été développés, notamment pour les véhicules automobiles. Ces systèmes facilitent la tâche du conducteur en calculant le meilleur itinéraire (le plus court, le plus rapide, le plus simple, le moins cher, etc.) vers sa destination ce qui lui permet d'éviter de devoir interpréter une carte pendant la conduite. Ces systèmes sont particulièrement utiles pour la conduite dans des régions qui ne sont pas familières du conducteur, ou pour choisir le chemin le plus court en tenant compte de l'état des routes en temps réel (travaux, trafic, manifestations, météo, etc.).

L'art antérieur montre des systèmes intégrant de larges écrans facilitant la lecture des cartes dans des terminaux intégrés au véhicule et dédiés à la navigation automobile.

Ces appareils coûteux sont équipés de moyens permettant de calculer la position du véhicule afin de l'afficher sur une carte routière. La position du véhicule peut être déterminée à l'aide de récepteurs de signaux satellites (par exemple le GPS) ou inertiel ou encore par triangulation des signaux de stations terrestres (par exemple les stations de bases d'un réseau de téléphonie mobile comme le GSM).

Le calcul de la position d'un récepteur GPS, par exemple, s'effectue à partir des données de position fournies par 3 satellites (ou plus) et du délai de transmission de ces signaux jusqu'au récepteur. La précision de tels systèmes est toutefois limitée à environ 100 mètres, en partie à cause d'effets naturels (variations atmosphériques, changements dans l'ionosphère, réflexion sur des obstacles, etc.), et parfois en partie à cause de déviations volontairement introduites sur les signaux d'usage civil de systèmes comme le GPS géré par le département de la défense américaine. Pour pallier ce manque de précision, l'art antérieur décrit l'emploi de récepteurs GPS différentiels, appareils coûteux comprenant un décodeur supplémentaire, de type radio ou satellite pour capter des signaux fournissant des valeurs correctives, mesurées par une station fixe comparant la position réelle de la station à la position obtenue par les signaux satellites. Afin d'optimiser le calcul des itinéraires en temps réel, ces systèmes de navigation sont parfois équipés de récepteurs captant des informations sur l'état du trafic, par exemple le système RDS. De tels récepteurs augmentent le coût du terminal embarqué.

Pour faciliter la tâche du conducteur, et pour sa sécurité, certains systèmes sont parfois équipés de système de reconnaissance de la parole et/ou de système de synthèse de la parole, ce qui rend encore plus complexe les systèmes de navigation puisqu'il faut y ajouter un microphone, un haut-parleur, et au moins un processeur pour effectuer la reconnaissance ou la synthèse de la parole ou les deux. Dans tous les cas, la reconnaissance de la parole et la synthèse en temps réel sont effectués localement. La capacité de traitement et la mémoire limitée d'un système embarqué permettent le plus souvent une reconnaissance de mots isolés seulement.

Enfin, les données cartographiques, essentielles pour calculer les itinéraires et pour afficher la position du véhicule, sont généralement stockées localement, par exemple sur CD-ROM, qui ont l'inconvénient de ne pouvoir être mis à jour facilement et augmentent le coût, la taille et la maniabilité du système de navigation.

Pour pallier ces inconvénients, on retrouve dans l'art antérieur des systèmes décrivant l'utilisation partielle d'une base centrale de données cartographiques, reliée par une communication radio avec le véhicule.

Certains systèmes préconisent la transmission complètent des données cartographiques, ce qui demande une très grande largeur de bande ou impose des temps de transmission très longs, lorsque l'on sait par exemple que le transfert de données sur le réseau GSM s'effectue à l'heure actuelle à 9,6 kbits/s.

D'autres systèmes proposent de transférer une partie des données au départ puis de façon régulière en fonction de la position du terminal, Ceci limité l'usage en temps réel des données (calculs du temps de parcours, distance à parcourir, visualisation complète de l'itinéraire).

D'autres systèmes partiels proposent de transmettre le seul itinéraire et le temps de parcours, calculés dans la centrale, avec éventuellement les éléments graphiques permettant l'affichage des intersections. Ces systèmes ne sont guère utiles en temps réel, le guidage n'y étant pas adéquat, en particulier par l'impossibilité de gérer les déviations (route bloquée, sorite manquée, etc.), un des événements les plus stressants pour un conducteur.

Pour permettre un vrai guidage embarqué, en particulier à l'aide d'un téléphone portable, il manque donc à ces systèmes utilisant une base de données cartographiques centrale les moyens permettant au système de navigation de guider le conducteur même si celui-ci s'écarte du chemin prévu, par exemple en cas de travaux, rue bloquée, ralentissement, ou de tout autre empêchement ou erreur d'inattention. Ainsi dans l'état de l'art existant, soit les données complètes des régions empruntées par le conducteur sont transmises au terminal pour que le calcul soit effectué localement, soit le conducteur doit lui-même interroger le serveur à nouveau, avec les délais que cela comporte, ne serait-ce que le temps initial nécessaire pour établir une nouvelle connexion.

Il manque également aux systèmes décrits ci-dessus utilisant une base de données centralisée les moyens permettant au conducteur de visualiser sa position par rapport à des repères géographiques généraux sans pour cela surcharger la transmission par l'envoi de détails non pertinents à son itinéraire.

Il manque également les moyens permettant de fournir au conducteur, en temps réel, sous forme de texte, graphique, ou encore verbalement, la marche à suivre à chaque carrefour, les moyens permettant au conducteur de donner verbalement sa commande sans un système de reconnaissance de la parole, les moyens permettant au système de navigation de calculer localement et en temps réel le temps de parcours et l'heure d'arrivée estimés, les moyens permettant d'obtenir une position précise du véhicule sans l'emploi de récepteurs radios ou de satellites supplémentaires pour capter les signaux différentiels, les moyens d'optimiser l'itinéraire en temps réel sans l'emploi de récepteur radio ou de satellites supplémentaires pour capter des données de trafic.

Enfin, il manque aux systèmes de navigation de l'art antérieur les dispositifs permettant de transformer un radio téléphone ou un agenda électronique en un véritable système de navigation automobile.

L'invention concerne un système de navigation, par exemple pour un véhicule automobile, comprenant un terminal possédant les moyens de communication lui donnant accès à un serveur centralisé par une liaison hertzienne, satellite ou terrestre, par exemple GSM, PCS, CDPD, SMS, PHS, CDMA., GMPCS. Le serveur contient les données cartographiques et les moyens de calculer des itinéraires. Le serveur ne possède pas nécessairement lui-même les moyens de communication, mais peut être relié, par exemple par Intemet, à une passerelle vers le réseau de radiocommunication.

Le terminal mobile comprend les moyens permettant de choisir le point de départ et la destination, de transmettre une interrogation comprenant ces points, et de demander au serveur centralisé de calculer le meilleur itinéraire selon un critère choisi par l'utilisateur (le plus rapide, le plus simple, le moins cher, le plus court, avec ou sans autoroute, le plus agréable, en passant par tel ou tel point intermédiaire, à pied, à bicyclette, en métro, en autobus, etc.).

Le terminal comprend également le moyen de déterminer de façon automatique la position du véhicule, soit par l'emploi d'un système de repérage par satellites de type GPS ou équivalent, soit par l'emploi d'un système de triangulation de station de base d'un réseau de téléphonie cellulaire, ou tout autre méthode.

La position de départ faisant partie de l'interrogation d'itinéraire est préférablement celle du véhicule telle que déterminée de façon automatique, ce qui évite de devoir entrer manuellement une adresse de départ.

L'invention est caractérisée par le fait que le serveur centralisé transmet l'itinéraire sous forme vectorielle, c'est-à-dire des segments de droite ou d'arc, avec au moins pour chaque segment les coordonnées de latitude et longitude de ses extrémités (ou d'au moins une, l'autre pouvant être déterminée par le début du segment suivant), ce qui permet un rendu graphique local et permet de positionner le terminal sur l'itinéraire, et éventuellement le type de route (rue, boulevard, nationale, autoroute, etc.), ce qui permet de faciliter la diffusion de message. Le serveur transmet également des informations typiques de ce type de route, la vitesse moyenne prévue sur cette route, si différente de celle normalisée du type de route, ce qui permet au terminal mobile d'estimer en temps réel le temps de parcours restant, et le nom de la route, ce qui permet de diffuser des messages adaptés. D'autres informations peuvent être également transmises, comme le sens des rues, la hauteur permise des rues, etc.

L'invention est de plus caractérisée par le fait que le système de navigation comprend dans le véhicule le moyen de recevoir ces informations et de les stocker, les moyens d'obtenir de façon régulière la position du véhicule, de montrer la position du véhicule sur une carte formée à partir des segments reçus, de calculer en temps réel l'heure estimée d'arrivée, de diffuser des messages de guidage ou d'information pertinente à la position, sous formes de textes, graphiques ou sonores. Ainsi quelques secondes avant un changement de direction (selon un délai programmable), le terminal mobile peut diffuser des messages du type : " prendre la deuxième à droite, rue de Montrouge", " dans 2 km, prendre sortie 106 direction Eastman", etc.

L'invention est aussi caractérisée par le fait qu'en plus de l'itinéraire, le serveur transmet au terminal les segments des routes croisant l'itinéraire, ainsi que, si possible, le type de priorité de chaque intersection (stop, feu, priorité à droite, etc.), et ainsi que, si possible et lorsque nécessaire, les données permettant d'identifier la destination de l'intersection (par exemple le nom des villes principales vers lesquelles mène la route).

L'invention est également caractérisée par le fait que le service centralisé évalue la possibilité que le véhicule dévie de son itinéraire et emprunte l'un quelconque des croisements. Pour une, plusieurs, ou chacune des déviations possibles, le service centralisé calcule et transmet également au terminal le meilleur itinéraire alternatif permettant au conducteur de se rendre à sa destination, formant ainsi une zone d'information de proximité autour de l'itinéraire. Selon un paramètre programmable, la procédure peut être répétée pour foumir un troisième, un quatrième, etc. niveau d'itinéraire en cas de déviation par rapport à une des recommandations du niveau précédent.

L'invention est de plus caractérisée par le fait que le système de navigation comprend dans le véhicule le moyen de vérifier la position du véhicule par rapport à l'itinéraire prévu, de déterminer si le véhicule n'a pas pris la route recommandée, mais plutôt une des intersections, et dans ce cas d'avertir le conducteur que le chemin secondaire précalculé est maintenant utilisé s'il est disponible, et de fournir les instructions à suivre selon ce chemin secondaire.

Dans le cas où un itinéraire secondaire n'est pas disponible, ou si le véhicule dévie du nouvel itinéraire recommandé, ou, pour chaque niveau d'itinéraire pré-stocké, un des troisièmes (ou énièmes) niveaux d'itinéraires transmis, le terminal mobile communique alors de façon automatique avec le serveur centralisé, après en avoir averti le conducteur, et transmet sa position en demandant au serveur un nouvel itinéraire pour se rendre à la destination initialement prévue.

L'avantage de transférer ces informations concernant les croisements et les itinéraires à suivre en cas de déviation ou d'erreur de conduite est multiple. Cela permet entre autres de ne pas avoir besoin de programme de calcul d'itinéraire localement, ce qui simplifie le programme de guidage embarqué et réduit les besoins en capacité de traitement et en mémoire, et diminue le coût du terminal mobile. Cela permet une visualisation plus riche en indiquant les croisements et les routes avoisinantes, de recommander immédiatement et sans délai un nouvel itinéraire en cas de déviation, d'afficher à tout moment une représentation graphique des chemins alternatifs en fonction de la position du terminal, ce qui permet d'évaluer de façon autonome et rapidement l'impact de prendre une voie détournée, par exemple pour contourner un incident (ralentissement, accident, rue bloquée, etc.).

US-A-5 508 917 enseigne un procédé d'aide interactive à la navigation en temps réel un peu similaire à celui de l'invention. Mais ce procédé se fonde sur une pluralité de balises contenant des informations de guidage, à proximité immédiate desquelles doit se trouver le véhicule, contrairement au procédé de l'invention, selon lequel le véhicule communique avec un serveur centralisé.

L'invention est également caractérisée par le fait que le serveur peut conserver les informations (itinéraire, zone de proximité, etc.) transmises au terminal mobile, qu'il peut obtenir de façon régulière des informations sur l'état des routes (trafic, manifestation, travaux) et/ou de conditions météorologiques, qu'il peut vérifier régulièrement si ces informations affectent l'itinéraire ou sa zone de proximité, et le cas échéant, transmettre ces informations au terminal mobile, et si cela est utile, par exemple lorsqu'il est possible de contourner un bouchon, le serveur peut également transmettre un nouvel itinéraire au terminal mobile, celui-ci avertissant alors le conducteur du changement et le guidant dans cette déviation.

Ceci a l'avantage de ne pas nécessiter un récepteur supplémentaire dans le véhicule pour capter des informations de trafic et donc de réduire le coût du système embarqué. Si le terminal mobile transmet à intervalles réguliers sa position au serveur, celui-ci en tiendra compte pour vérifier qu'un incident de trafic ou de météo est réellement pertinent avant d'en avertir le terminal mobile. Le serveur peut également interroger le terminal mobile sur sa position afin de vérifier l'intérêt des changements avant de lui transmettre ces nouvelles informations.

Le terminal mobile peut également être équipé de récepteurs de données de trafic, et effectué lui-même les ajustements pour permettre une nouvelle évaluation du temps de parcours, et également vérifier si un des itinéraires de déviations de sa zone de proximité est plus avantageux. Il peut aussi communiquer directement avec le serveur pour lui demander si un nouvel itinéraire plus avantageux existe étant donné les nouvelles conditions de trafic temps réel.

L'invention est de plus caractérisée par le fait que le serveur peut avoir en banque, ou être relié à d'autres serveurs ayant en banque, des données de visualisation, par exemple des photos ou des images vidéos d'un carrefour, ou des informations permettant une projection tridimensionnelle de la vue d'un carrefour qu'un aurait un conducteur se présentant selon l'itinéraire indiqué, que le serveur transmet ces informations au terminal mobile où elles sont stockées, et par le fait que le terminal mobile peut afficher ces visualisations au moment opportun en fonction de sa position. Ceci est particulièrement utile en cas de doute, ou d'erreur de précision sur l'estimation de la position, et en particulier à des intersections ou des ronds points ou 3, 4 ou 5 routes se croisent.

L'invention est de plus caractérisée par le fait que le serveur peut avoir en banque ou être relié à d'autres serveurs ayant en banque, des informations générales pertinentes sur l'itinéraire, telles que stations-service, restaurants, hôtels, information touristiques, historiques ou géographique. Le serveur peut transmettre ces informations au terminal mobile au moment de la requête d'itinéraire ou sur demande au cours du voyage.

L'invention est également caractérisée par le fait que les messages d'informations ou de guidage en temps réel du conducteur peuvent se faire sous forme audio. Ceci a l'avantage de faciliter la tâche du conducteur, en rendant la navigation plus sûre car le conducteur n'a pas besoin de constamment regarder l'écran du terminal. Ceci permet aussi d'utiliser un terminal ayant des capacités d'affichage limitées, par exemple un téléphone GSM avec un écran de 4 lignes, ou même un accessoire sans fonction d'affichage du tout, par exemple un accessoire de téléphone, comme un kit mains-libres pour téléphone mobile, le traitement étant effectué non sur le téléphone lui-même mais dans l'accessoire sur lequel se greffe le téléphone, le téléphone étant alors utilisé comme module de communication uniquement.

Ces messages sonores peuvent être générés par le serveur en fonction de l'itinéraire ou de la position du terminal, être transmis au terminal mobile, soit au moment de la requête initiale, soit en cours de trajet, être stockés par celui-ci, et, tels quels ou combinés entre eux, être diffusés au moment opportun par le terminal mobile en fonction de sa position. Cela a l'avantage de réduire la complexité et le coût du terminal mobile, et également de ne pas figer dans le terminal mobile le choix de la langue et de l'ergonomie du dialogue.

Ces messages peuvent aussi être générés localement à partir d'un système de synthèse de la parole, au moment opportun en fonction de la position. Cela a l'avantage de limiter la quantité d'informations transmises par le serveur, mais requiert un système de synthèse de la parole.

L'invention est de plus caractérisée par le fait que les interrogations peuvent se faire sous forme vocale. Ceci a l'avantage de permettre une interface plus sûre car moins dangereuse pour un conducteur devant porter son attention et son regard sur sa conduite et sur la route. Cela rend aussi possible le contrôle ou l'interrogation du système de navigation sans avoir à s'arrêter. Ainsi pendant la conduite, des informations telles la distance ou le temps restant à parcourir, la distance des stations-service, hôtels ou restaurants, les plus proches, ou une description de la région touristique traversée (par exemple "quel est ce château sur la droite ? "), etc., peuvent être obtenues.

Ainsi, le terminal mobile numérise la parole et extrait de celle-ci des paramètres d'analyse, puis le terminal mobile transmet les paramètres au serveur, en général avec sa position. Le serveur effectue la reconnaissance par une recherche à l'aide d'une banque de mots de vocabulaire ou de phonèmes, détermine l'objet de l'interrogation, et transmet sa réponse au terminal mobile.

La numérisation et l'extraction des paramètres d'analyse localement permet un échantillonnage couvrant une partie importante des fréquences de la parole humaine (un échantillonnage à une fréquence de Nyquist de 44 kHz par exemple). L'analyse et l'extraction des paramètres étant effectuées avant la transmission vers le serveur, ceci permet d'éviter les distorsions de la parole causées par la largeur de bande réduite des canaux téléphoniques (en général limitée à 4 kHz) et par les compressions de la parole en vigueur en téléphonie numérique (par exemple le codage Full Rate ou Enhanced Full Rate), distorsions rendant la tâche d'une reconnaissance de la parole centralisée difficile.

Ainsi une reconnaissance multilocuteurs du langage naturel devient possible (plutôt que la reconnaissance de mots isolés monolocuteur), la taille du vocabulaire peut être beaucoup plus grande, et le système de reconnaissance centralisé peut posséder une quantité de mémoire et une capacité de calcul qu'il serait prohibitif d'installer dans un véhicule. Ceci est particulièrement important pour la navigation automobile où le nombre de noms de villes, de rues, etc., dépasse généralement la taille des vocabulaires pouvant être traités localement. Une reconnaissance multilingue et multilocuteurs est alors possible.

L'avantage de transmettre à la fois les paramètres d'analyse et la position du terminal mobile est que cela libère complètement l'utilisateur du système de navigation (le conducteur ou la conductrice) et lui facilite la tâche. Les risques d'erreurs du système de reconnaissance de ta parole sont aussi moins grand, puisqu'une seule requête peut être faite, et cela diminue donc les risques de stress et de danger pour l'utilisateur au volant, et permet de fournir des renseignements liés à la position immédiate.

La reconnaissance de la parole peut bien sûr aussi être effectuée localement. Cela a l'avantage de limiter la quantité d'informations échangées entre le serveur et le terminal mobile, mais requiert un terminal mobile plus complexe et impose des limites à la performance du système de reconnaissance de la parole.

Le terminal mobile peut employer un système de positionnement par satellites, par exemple de type GPS.

La précision de la position mesurée localement par le terminal mobile à l'aide des signaux captés simultanément des satellites d'un système de positionnement par satellites de type GPS peut être améliorée par l'emploi d'une information différentielle, obtenue par une ou plusieurs stations fixes, dont la position est connue, captant simultanément les signaux des mêmes satellites. En général les informations différentielles sont formées par la différence entre la distance mesurée (appelée pseudo-range) entre le récepteur de la station fixe et chacun des satellites, et la distance réelle calculée à partir de la position connue de la station fixe. La précision accrue est due au fait que les erreurs d'un système de positionnement par satellites de type GPS sont très similaires sur une distance d'environ 500 km.

L'invention est caractérisée par le fait que ces informations différentielles sont transmises en utilisant le même réseau hertzien que celui employé pour les interrogations et les réponses d'itinéraire. Ceci évite de devoir employer un autre récepteur (satellites, RDS/FM, etc.) pour capter les informations différentielles, ce qui diminue la complexité et le coût du terminal mobile.

Le réseau est de préférence de type GSM, ou encore de type GMPCS (Global Mobile Personal Communcations by Satellite), et supporte de préférence l'envoi de messages courts de type SMS.

L'invention est également caractérisée par le fait que les informations différentielles peuvent être transmises par SMS du serveur au terminal mobile, à intervalles réguliers, par exemple à toutes les 10 ou, étape 30 s. L'avantage de l'utilisation de messages courts de type SMS est que ceux-ci peuvent être transmis même lorsque la liaison hertzienne est utilisée pendant une communication téléphonique, ce qui facilite l'utilisation du même réseau pour la transmission des interrogations, des réponses, et des corrections différentielles, et évite de devoir employer un appareil dédié à la réception des informations différentielles.

L'invention est de plus caractérisée par le fait que le serveur peut être un serveur Intemet. Ceci permet une utilisation partout à travers le monde, puisque l'accès Intemet est disponible partout dans le monde. Ceci permet également d'utiliser plusieurs types de terminaux puisque le mode de connexion est standardisé. Ceci permet également de tirer parti du fait que de nombreux services pouvant être utiles à une personne mobile sont ou seront disponibles sur Internet et que le serveur pourra y accéder après une entente avec les fournisseurs de ces informations, et que la sélection des données pourra se faire en tenant compte de la position du terminal. Ainsi toutes les données ne sont pas nécessairement gérées par ni stockées sur le serveur.

L'invention est de plus caractérisée par le fait que le véhicule peut transférer de façon régulière sa position au serveur, et que ces positions peuvent être stockées par le serveur, et que le serveur peut fournir à un ou plusieurs terminaux tiers, y compris mobiles, et en particulier grâce à Internet, des informations concernant la position du terminal mobile à tout moment. Ceci est particulièrement utile pour la localisation de véhicule et la gestion de flottes de véhicules, permettant d'offrir à la fois des services d'aide à la navigation et de gestion de flottes de véhicules, et permettant d'offrir ce service en partageant les données cartographiques entre plusieurs sociétés qui n'ont plus alors besoin chacune de s'équiper d'un système complet de suivi et de gestion de flotte de véhicules. D'autres informations peuvent être échangées, notamment des messages, des informations sur l'état du véhicule, sur les temps de parcours, sur les vitesses, sur la température, le nombre de tours minutes, sur la distance parcourue, etc.

Préférablement les informations fournies par le serveur au terminal tiers contiennent des données cartographiques sous formes vectorielles correspondant à au moins une des positions du terminal mobile, et comprennent un programme permettant l'affichage de ces informations par le terminal tiers (par exemple un programme Java).

L'invention est de plus caractérisée par le fait que le serveur peut recevoir des demandes de calculs d'itinéraires d'un autre terminal (mobile ou non), et transférer les itinéraires demandées au terminal mobile (et éventuellement d'autres messages). Ceci permet plusieurs variantes de mise en oeuvre du service. Par exemple une personne peut se connecter par Internet ou Minitel depuis chez elle ou de tout autre endroit, effectuer une requête d'itinéraire, fournir le numéro de son téléphone portable, et le serveur transférera l'itinéraire et les données appropriées au téléphone. La requête peut aussi être effectuée par téléphone à une opératrice qui interrogera le serveur, et transférera l'itinéraire à un terminal mobile, par exemple un terminal installé dans un véhicule. Ceci permet entre autres d'utiliser comme terminal mobile un téléphone portable ayant un clavier limité, sur lequel l'entrée d'une adresse est assez fastidieux. Cela permet aussi d'effectuer une interrogation d'itinéraire au volant de sa voiture par la voix, et donc permet une utilisation même pendant la conduite et de façon plus sûre, et sans qu'un système de reconnaissance de la parole ne soit requis.

L'invention est de plus caractérisée par le fait que les programmes du terminal mobile (extraction de paramètres d'analyse, guidage en temps réel, affichage graphique, etc.) peuvent être téléchargés du serveur pour être stockés et exécutés localement. Ceci a l'avantage d'offrir une mise à jour rapide des programmes lorsque de nouvelles fonctionnalités sont disponibles ou pour corriger une erreur. Ceci a aussi l'avantage de permettre à plusieurs types de terminaux de servir de système d'aide à la navigation. Ceci permet aussi d'utiliser des terminaux ayant des capacités de stockage plus limitées, les programmes étant transférés seulement lorsque requis.

L'invention est caractérisée par le fait qu'un téléphone mobile ou un agenda électronique peuvent remplir la fonction du terminal mobile du système d'aide à la navigation. L'emploi d'un téléphone ou d'un agenda électronique a l'avantage de limiter le nombre d'appareils présents dans un véhicule, et également d'utiliser un appareil qui peut être emporté partout avec soi et utilisé pour ses autres fonctions, plutôt qu'un appareil dédié à la navigation automobile. Le fait qu'il soit modulable permet de le séparer des autres éléments, par exemple le convertisseur analogique numérique, la reconnaissance de la parole, la synthèse, le haut-parleur, le microphone déporté, etc. La fonction d'affichage de carte peut être très utile comme piéton par exemple, avec ou sans capteur d'un système de positionnement de type GPS intégré. L'autre intérêt d'utiliser un téléphone ou un agenda électronique détachable des autres composants, y compris éventuellement du capteur de type GPS, est que cela permet au conducteur d'interroger le serveur et de planifier son voyage hors de son véhicule, éventuellement en consultant les conditions de route avant de prendre son véhicule. Le téléphone ou l'agenda électronique, une fois connecté à un récepteur de positionnement par satellites dans le véhicule, peut alors guider le conducteur le long de son itinéraire. De plus, le fait d'utiliser un téléphone portable est avantageux car le propriétaire du téléphone sera enclin de toutes façons à acheter un kit mains-libres lui permettant d'utiliser son téléphone dans son véhicule, et donc pourra limiter ses dépenses en achetant un kit mains-libres intégrant un capteur de type GPS. Un autre avantage d'utiliser un téléphone portable est qu'il intègre déjà un écran et un clavier (ou écran tactile ou stylet), et possède les éléments de communications nécessaires à la mise en oeuvre de ce système de navigation. Ainsi aucun autre écran n'est requis, et aucun autre module de communication n'est non plus requis (ni pour les interrogations, ni pour les réponses, ni pour les informations différentielles).

Ceci permet également d'utiliser un réseau de radio téléphonie, par exemple les messages courts de type SMS, accessibles presque partout (et bientôt partout avec les réseaux satellites), et de ne pas être tributaire de sources de diffusion de type RDS utilisant une bande FM.

Dans le cas où le terminal mobile est formé d'un téléphone portable, il est possible soit d'effectuer le calcul des paramètres d'analyse directement dans le téléphone, soit à l'extérieur du téléphone, et d'utiliser dans ce cas là le téléphone comme d'un module de communication. L'avantage d'effectuer le calcul des paramètres dans le kit mains-libres est qu'il comprend souvent déjà un microphone et une unité de traitement. Et aussi peut-on ainsi utiliser un téléphone n'ayant subi aucune modification.

Ainsi il est possible d'avoir une solution 100% vocale en utilisant un téléphone n'ayant subi aucune modification, tout le guidage et les interrogations se faisant par la parole.

L'ensemble des programmes nécessaire au système d'aide à la navigation décrit ci-dessus peuvent également être intégrés et exécutés soit sur dans le téléphone ou l'agenda, soit dans le kit mains-libres ou tout autre accessoire connecté au téléphone.

D'autres caractéristiques et avantages de l'invention ressortiront de la description qui suit, faite à titre illustratif et nullement limitatif, en se référant aux dessins ci-annexés sur lesquels:
La figure 1 représente une vue globale d'un système de navigation pour téléphone portable avec accès à un serveur centralisé et la transmission d'informations différentielles de correction GPS, avec éventuellement le transfert par un centre d'appel.
La figure 2 représente les éléments embarqués permettant l'accès à une base de données centralisée, la mesure de position et l'interaction avec le conducteur.
La figure 3 représente le procédé de communication entre le terminal et le serveur centralisé lors d'une interrogation d'itinéraire.
La figure 4 représente le procédé permettant une utilisation locale de ces informations pour guider le conducteur du véhicule en temps réel.

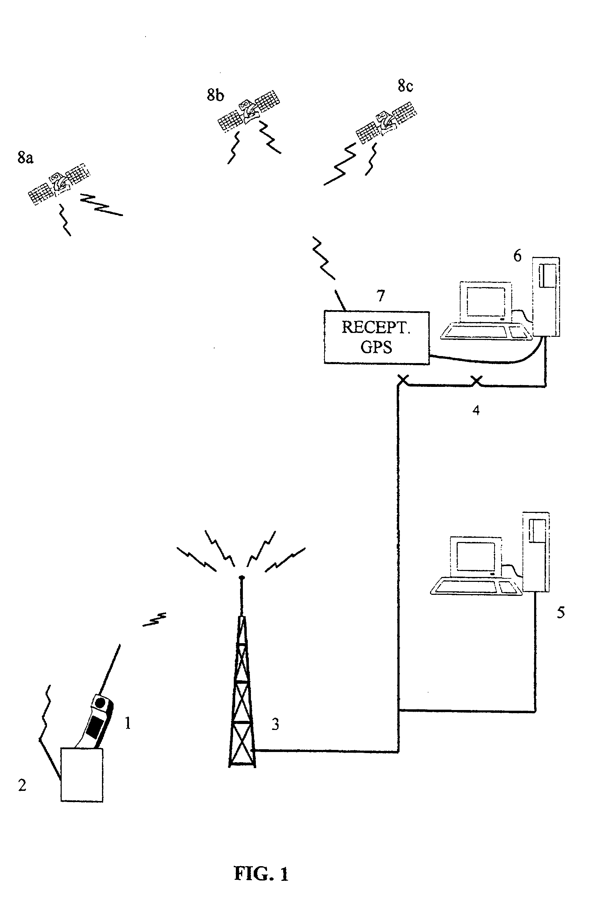

Selon un mode préféré de réalisation, en se référant à la figure 1, le terminal mobile est formé d'un radio téléphone portable 1 connecté à un kit mains-libres 2 préférablement fixé à l'intérieur d'un véhicule, l'ensemble 1 et 2 formant le terminal mobile. Ceci étant à titre d'exemple, les éléments du kit 2 pouvant être intégrés au téléphone, ou encore l'ensemble pouvant être intégré dans un ordinateur de bord du véhicule. Le terminal mobile 1,2 est relié par une liaison hertzienne à un serveur centralisé 5. Le serveur 5 transmet des données d'itinéraire au terminal mobile 1,2, et également des données correctives différentielles obtenues par une station fixe 6 comprenant un récepteur 7 de positionnement par satellites. La communication entre le serveur 5 et la station fixe 6 se fait par exemple par le réseau Intemet 4.

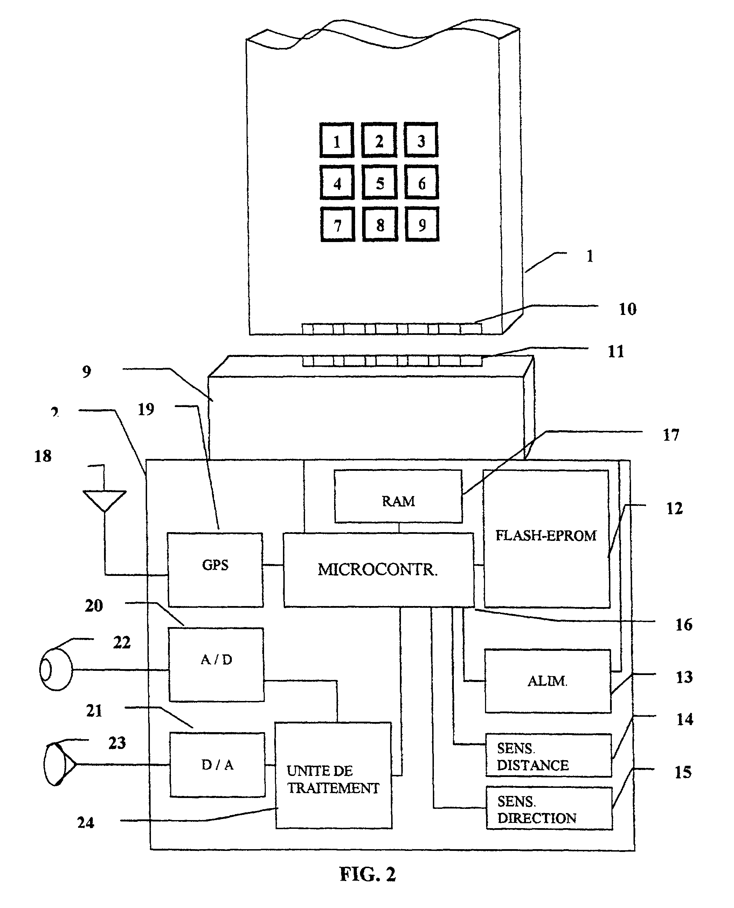

En se référant à la figure 2, le kit 2 comprend un microcontrôleur 16, de la mémoire vive 17 de type Random Access Memory (RAM) pour l'exécution de ses programmes stockés sur une mémoire permanente 12 de type Erasable Programmable Read Only Memory (FLASH-EPROM) pouvant être reprogrammée.

L'alimentation électrique 13 du microcontrôleur et des autres éléments est préférablement fournie par le véhicule, par exemple par un branchement sur l'allume-cigares. Le kit mains-libres comprend un ensemble de connecteurs 11 compatibles avec les connecteurs 10 du téléphone portable 1, permettant l'échange des données et éventuellement une alimentation électrique de l'un par l'autre.

L'utilisateur du terminal mobile 1,2, par exemple le conducteur du véhicule, peut obtenir un itinéraire en communiquant sa requête à un serveur 5, figure 1, par une communication hertzienne, par exemple relayée par une station de base 3 d'un réseau de téléphonie cellulaire ou encore par un réseau satellite, par exemple à réseau de satellites à orbites basses ou moyennes du type Iridium ou Globalstar. Le serveur contient les bases de données cartographiques et les programmes de calcul d'itinéraire. Le serveur est un serveur relié au réseau Intemet 4 et l'échanges des données se fait par TCP/IP (à, titre d'exemple non limitatif).

La requête comprendra un choix de destination, par exemple une adresse, ou le nom d'une personne ou d'une entreprise, le serveur pouvant avoir accès à des annuaires de type pages blanches ou page jaunes permettant de faire le lien entre un nom et une adresse. La requête peut aussi être plus générale en demandant par exemple la station service, ou le guichet automatique, ou le restaurant de tel nom, ou la pharmacie, le ou la plus proche, le serveur effectuant alors les recherches nécessaires pour ce servir de cette information pour déterminer la destination demandée. La requête comprend une position de départ, pouvant être déterminée de façon automatique par le terminal ou entrée par l'utilisateur. La requête comprend aussi la méthode d'optimisation de l'itinéraire spécfiée par l'utilisateur.

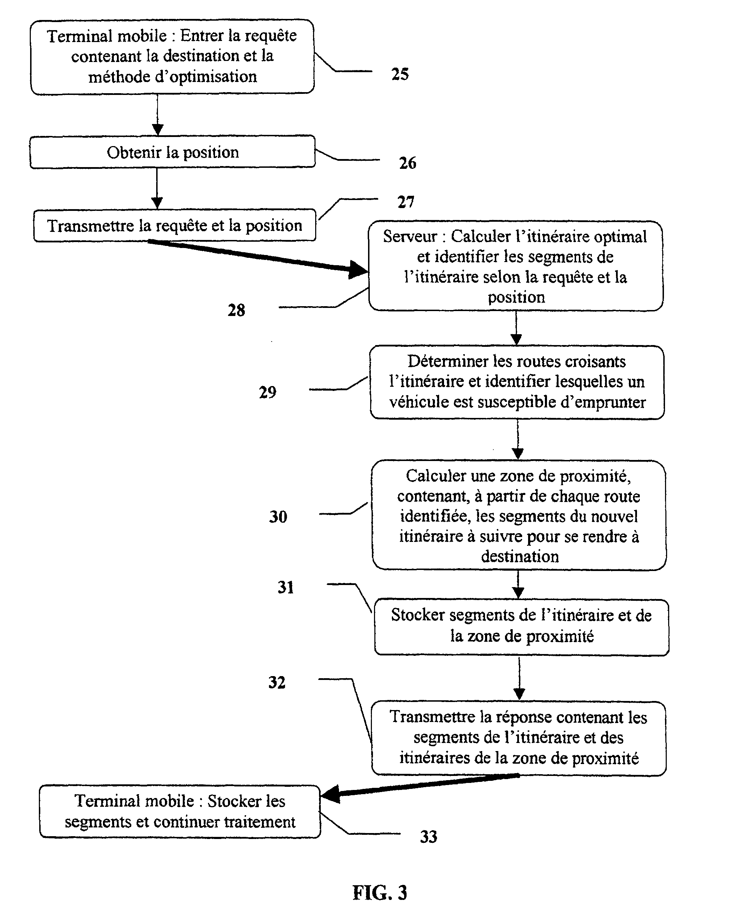

En se référant à la figure 3, la requête est entrée sur le terminal, étape 25. La requête est entrée selon ce mode de réalisation préféré par une requête verbale décrite plus bas, mais cette requête peut également être entrée à l'aide d'un clavier, d'un stylet, d'un écran tactile, etc. La position est déterminée de façon automatique, étape 26, le terminal mobile 1,2 transmet la requête au serveur 5 par voie hertzienne, étape 27, ici en utilisant le protocole de transfert de données d'un réseau GSM, bien que tout autre mode de communication sans fil puisse être utilisé.

Le serveur 5, ayant accès à des données cartographiques (non figurées) calcule le meilleur itinéraire et identifie les routes à suivre par des segments de droite et d'arc, étape 28. Des données concernant chaque segment de l'itinéraire sont extraites, notamment la position de ses extrémités (par exemple latitude, longitude, attitude), ou d'au moins une des extrémités, par exemple la fin du segment, l'autre pouvant être déterminée par le début du segment suivant. Les données contiennent également une description du type de route (route nationale, autoroute, rue, boulevard, etc.), le nom, la longueur de l'itinéraire (en km ou miles), la vitesse moyenne prévue sur ce segment (éventuellement en fonction de l'heure en tenant compte de statistiques de données de trafic), ou directement en tenant compte de données en temps réel du trafic ou de la météo, obtenues par des moyens automatiques ou entrées par des opérateurs. L'avantage d'utiliser également des données de météo est que s'il pleut, neige ou encore s'il y a du brouillard, la vitesse moyenne sera préférablement réduite.

La vitesse moyenne pourra ne pas être transférée pour chaque segment mais pour chaque type de segments (ainsi par exemple, vitesse moyenne des rues=45 km/h, vitesse moyenne des autoroutes=120 km/h), ne transférant pour chaque segment une vitesse différente seulement lorsque nécessaire.

Le serveur 5 pourra éventuellement retoumer immédiatement au terminal mobile 1,2 des résultats intermédiaires, par exemple la durée estimée du trajet et les grands axes proposés, et proposer également plusieurs options, en demandant une confirmation du terminal mobile 1,2, avant de poursuivre avec les étapes suivantes.

Le serveur 5 évalue également les routes (rue, autoroutes, etc.) croisants l'itinéraire, et en tenant compte d'informations sur le sens des rues par exemples, évalue la possibilité pour le véhicule d'emprunter ces voies, étape 29. Des données semblables aux données de segments de l'itinéraire sont également identifiées. Elles permettront d'afficher sur le terminal mobile 1,2 une zone de proximité entourant l'itinéraire. Le serveur peut également identifier les grands axes entourant l'itinéraire et la topographie générale (contour d'une ville, frontière d'un pays, cours d'eau), qui faciliteront la visualisation des informations d'itinéraires.

Le serveur pourra choisir de retenir toutes les routes croisant l'itinéraire, ou seulement les plus probables, selon des critères comme la vitesse moyenne de la route, la densité de trafic, la visibilité, la familiarité de l'utilisateur avec l'itinéraire, ou encore seulement quelques-unes unes à intervalles réguliers. Le serveur choisira de préférence de conserver au moins les segments correspondant aux continuations, c'est-à-dire les situations où l'utilisateur ne prend pas une sortie d'autoroute ou ne suit pas les recommandations de tourner à gauche ou à droite sur telle ou telle rue. Ce sont souvent des situations stressantes où l'utilisateur, conscient ne n'avoir suivi, ou de ne pas avoir pu suivre, une recommandation, est inquiet et sera rassuré si le système de navigation est capable de lui foumir une solution de rechange sans délai.

Le serveur 5 évalue pour chaque route retenue un itinéraire (le meilleur ou le plus simple) permettant au véhicule de se rendre à destination même s'il emprunte cette déviation (par mégarde ou par contrainte), étape 30. Chaque itinéraire contiendra le même type d'informations que pour l'itinéraire principal (position des extrémités des segments, type de route, nom, vitesse moyenne, etc.).

De préférence le serveur 5 ne transmettra pas les données concernant des segments déjà transmis.

Le serveur 5 selon ce mode de réalisation préféré conserve l'itinéraire retenu et préférablement les données annexes, étape 31, afin de pouvoir s'en servir plus tard. Préférablement le serveur ne conserve pas toutes les données, mais plutôt des index se référant aux éléments de la base de données cartographiques.

Le serveur 5 transmet ensuite les informations calculées concernant l'itinéraire et la zone de proximité au terminal mobile 1,2, étape 32. Celui reçoit et stocke ses informations, étape 33, pour s'en servir comme source de données en temps réel. La communication entre le serveur et le terminal mobile 1,2 est alors fermée, ce qui réduit le coût de la communication, celle-ci étant en générale facturée au temps passé.

Si les données à transmettre sont trop importantes, le serveur 5 pourra éventuellement transmettre les données de l'itinéraire en totalité, et seulement les données de proximité correspondant à une première partie de l'itinéraire. Le terminal mobile 1,2 pourra alors, de temps en temps, demander au serveur de lui transmettre la suite des données de proximités. Il est important de transférer l'ensemble de l'itinéraire même si toutes les données de proximités ne sont pas transmises afin de permettre au terminal mobile 1,2 de recalculer en temps réel la durée estimée de parcours et la distance restant à parcourir, ainsi que pour permettre à l'utilisateur d'avoir une représentation graphique lui montrant de façon relative sa position par rapport au reste de l'itinéraire restant à parcourir.

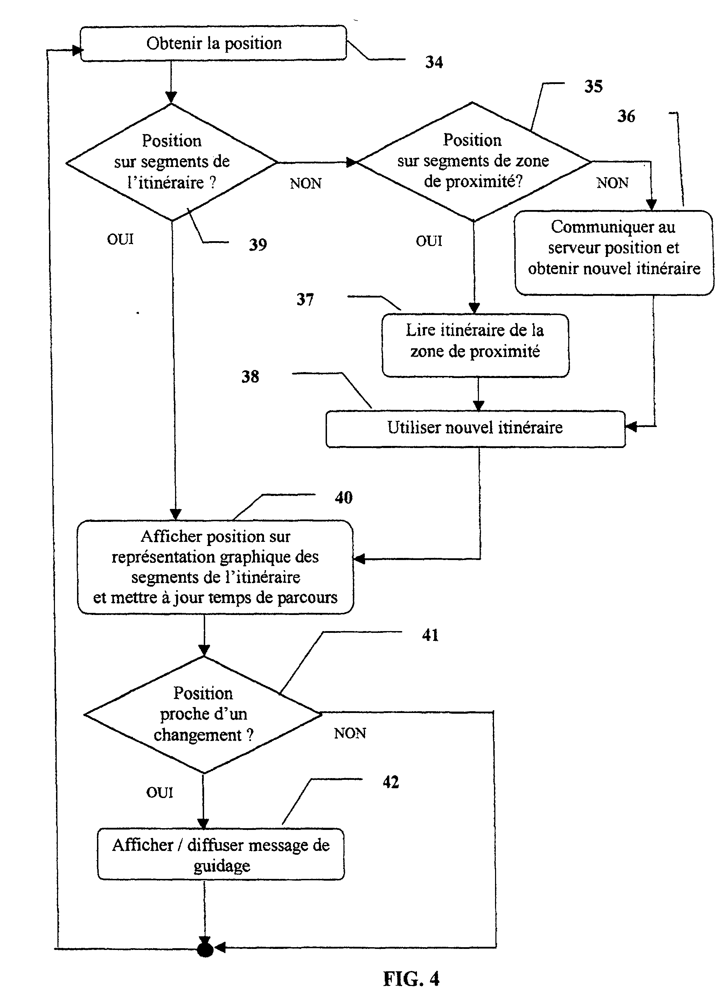

En se référant à la figure 4, le terminal mobile 1,2 peut maintenant utiliser ces informations en temps réel. Il obtient régulièrement sa position, étape 34 (par exemple à toutes les secondes), puis vérifie si la position est bien sur l'itinéraire, étape 39. Une erreur de lecture de la position ou de précision des données cartographiques pouvant se produire, le terminal mobile 1,2 tiendra compte de la position précédente, du segment le plus proche de la position mesurée, et de limites physiques, pour déterminer de façon plus précise et plus probable sa position.

Si le terminal mobile 1,2 détermine qu'il est sorti de son itinéraire, il vérifie ensuite s'il possède dans sa zone de proximité l'itinéraire permettant au véhicule de se rendre à destination, étape 35. Si oui, il obtiendra le nouvel itinéraire directement, étape 37, et dans le cas contraire, il interrogera le serveur 5 pour lui demander un nouvel itinéraire, en lui fournissant sa position courante, étape 36. Dans les deux cas, le nouvel itinéraire sera maintenant celui utilisé pour guider le véhicule, étape 38. De préférence, le terminal mobile 1,2 diffusera un message indiquant qu'il a pris connaissance de la déviation et qu'il prend les mesures appropriées.

Le terminal mobile 1,2 n'a en aucun moment besoin de recalculer un itinéraire, et donc n'a pas besoin de conserver localement un programme de recherche, programme pouvant être complexe, surtout si l'on veut tenir compte des multiples critères d'optimisation (le plus court, le plus rapide, avec ou sans autoroute, le moins cher, passant par tel ou tel point intermédiaire, etc.).

Le terminal mobile 1,2 met ensuite à jour une représentation graphique indiquant sa position sur la carte formée par les segments de l'itinéraire (avec ou sans les données de la zone de proximité), et peut effectuer certains calculs comme le temps de parcours et la distance restant avant l'arrivée, étape 40.

Le terminal mobile 1,2 évalue ensuite la distance et le temps de parcours avant le prochain changement de direction, et évalue, selon des critères modifiables par l'utilisateur, s'il en est proche, étape 41. Si c'est le cas, le terminal mobile 1,2 peut afficher une information pertinente ou diffuser un message de guidage, étape 42, par exemple « prendre la prochaine sortie dans 2 km ».

En ce qui conceme les conditions routières, le serveur 5 reçoit régulièrement des informations sur les conditions routières et/ou sur les conditions météorologiques. Préférablement le serveur 5 aura conservé en mémoire les conditions précédentes et pourra vérifier si des changements ont eu lieu, puis mettre à jour les données concernant les vitesses des axes routiers qu'il possède dans sa base de données cartographiques. Le serveur 5 peut suivre plusieurs terminaux mobiles, et pour chacun, vérifier si les nouvelles conditions routières concement son itinéraire.

Si c'est le cas, le serveur 5 détermine s'il le peut la position du terminal mobile 1,2. Cette position pourra être estimée soit à partir de la position transmise de façon régulière par le terminal mobile 1,2, si celui-ci le fait, soit en interrogeant le terminal mobile 1,2 pour lui demander sa position, soit en estimant sa position en tenant compte de sa dernière position connue (éventuellement le point de départ de son itinéraire) et du temps écoulé depuis cette mesure.

Le serveur 5 évalue ensuite si les nouvelles données sur les conditions routières (changement dans les vitesses moyennes, route bloquée, accident, etc.) affectent l'itinéraire prévu ou sont d'un intérêt pour le conducteur. Si c'est le cas, le serveur 5 transmet cette information au terminal mobile 1,2. Le terminal mobile 1,2 pourra alors diffuser des messages avertissant le conducteur de la situation, et se servir par exemple de nouvelles données concemant la vitesse moyenne sur les routes pour recalculer l'heure d'arrivée.

Le serveur 5 évalue alors le meilleur itinéraire en tenant compte de ces nouvelles données et évalue si l'itinéraire est différent de celui du terminal mobile 1,2. Si c'est le cas, le nouvel itinéraire est transmis au terminal mobile 1,2. Le terminal mobile 1,2 pourra alors avertir l'utilisateur et soit utiliser automatiquement le nouvel itinéraire, soit proposer à l'utilisateur d'emprunter la déviation proposée.

Le serveur répétera ensuite l'opération pour chaque terminal mobile 1,2 jusqu'au dernier.

Les données sur l'état des routes peuvent être transmises au serveur 5 soit par une liaison filaire, soit par une liaison radio. Il est possible aussi d'utiliser des stations de relais qui capteraient les informations diffusées par des émetteurs RDS et les transféreraient au serveur 5.

En se référant à nouveau à la figure 2, le kit mains-libres 2 comprend ou est connecté à un convertisseur numérique analogique 21 et à un haut-parleur 23, ce qui lui permet de diffuser des messages sonores. Ces messages peuvent être soit générés par un programme de synthèse de la parole exécuté soit sur le microcontrôleur 16 soit sur une unité de traitement spécialisé 24, par exemple un Digital Signal Processor (DSP).

Les messages sonores peuvent également avoir été générés par le serveur 5 et transmis au terminal mobile 1,2 directement dans un format numérique, puis stockés, par exemple dans la mémoire RAM 17 ou dans la mémoire flash 12. Les messages sonores peuvent être soit constitués de préenregistrements, soit générés par un système de synthèse de la parole intégré ou relié au serveur 5.

Préférablement les messages sonores ont été compressés pour que leur temps de transmission ne soit pas trop long. Préférablement les messages sonores sont identifiés par un code permettant de connaître leur signification et la langue. Avant de transmettre un message, le serveur 5 transmet d'abord le numéro de version du message et le terminal mobile 1,2 vérifie qu'il n'a pas déjà le message stocké en mémoire avant d'accepter la transmission.

Le kit mains-libres 2 contient également un microphone 22, un convertisseur analogique numérique 20 et l'unité de traitement 24, par exemple un DSP, permettant de numériser des commandes vocales émises par l'utilisateur.

En ce qui concerne la reconnaissance de la parole, l'utilisateur met en marche l'activité, par exemple en appuyant sur un bouton. Le terminal mobile 1,2 peut aussi être en écoute permanente et détecter un niveau d'activité sonore correspondant à une personne commençant à parler.

Le signal sonore est numérisé à intervalles réguliers, par exemple à toutes les 16 ms, et conservé dans une mémoire tampon pour être traité. L'unité de traitement 24 calcule alors des paramètres d'analyse, par exemple par un filtrage numérique suivi d'une transformée de fourrier, suivie d'un filtre antibruit en fréquence puis d'un calcul de cepstres.

Le terminal mobile 1,2 transmet ces paramètres au serveur 5 une fois la position obtenue. La transmission peut se faire soit en bloc, par exemple une fois une fin d'activité de parole détectée, soit morceau par morceau tout au long de l'écoute.

Le serveur 5 effectue alors la recherche à partir de modèles de mots ou de phonèmes qu'il a en mémoire.

Le serveur 5 peut transférer tout d'abord le résultat de sa reconnaissance et demander une confirmation au terminal mobile 1,2 avant de poursuivre. Ainsi par exemple le terminal mobile 1,2 affichera l'adresse de destination reconnue et demandera une confirmation qui sera transmise au serveur 5.

Le serveur 5 évalue ensuite la requête, par exemple une demande de calcul de l'itinéraire, une demande contenant une destination, ou une demande de transmission d'une carte plus détaillée de la région.

Le serveur 5 transmet ensuite les données (par exemple un itinéraire ou une carte plus détaillée de la position courante du terminal mobile 1,2) correspondant au résultat ainsi que le résultat lui-même (par exemple l'adresse de la destination). Le terminal mobile 1,2 affiche alors le résultat et stocke puis traite si nécessaire les données.

Le traitement et la numérisation peuvent également être faits directement dans le téléphone qui contient déjà les convertisseurs et unités de traitement nécessaire à ce genre d'opération.

La reconnaissance de la parole peut également être effectuée entièrement localement, par exemple sur l'unité de traitement 24 ou sur le microprocesseur 16, avec des modèles de mots ou des modèles phonémiques ou allophoniques stockés en flash 12 ou transférés par le serveur 5.

La position décrite précédemment peut être obtenue de différentes façons, notamment par triangulation de stations de base d'un réseau téléphonique, ou par un système de positionnement par satellites, par exemple de type GPS ou Glonass. Le mode de réalisation préféré décrit utilise un capteur du réseau Global Positionning System (GPS).

Revenant à la figure 2, le microcontrôleur 16 reçoit régulièrement des informations permettant de déterminer sa position à l'aide d'un capteur GPS 19 recevant grâce à son antenne 18 les signaux provenant de satellites 8a, 8b et 8c, figure 1. Le microcontrôleur peut également utiliser des informations provenant d'autres sources pour déterminer la position du véhicule, par exemple de capteurs mesurant la distance parcourue 14 ou la direction 15. La vitesse de déplacement du véhicule, telle que mesurée par le récepteur GPS par effet Doppler peut également être utilisée pour raffiner l'estimation de la position.

La position peut également être améliorée par l'emploi de données différentielles. La station fixe 6, figure 1, dont la position réelle est connue, capte régulièrement les signaux GPS des mêmes satellites 8a, 8b et 8c à l'aide d'un récepteur 7 et mesure ainsi sa position telle que la mesurerait un terminal mobile 1,2. La station fixe 6 calcule les données différentielles et les transmet au serveur 5.

La méthode de calcul des données différentielles GPS est connue (voir notamment « GPS, Theory and Practice » de Hofmann-Wellendhof, Lichtenegger et Collins, Springer, 4^{ième} édition). Il est possible de calculer soit la différence entre la position connue et la position estimée, soit la différence entre les distances réelles à un instant donné et les distances estimées entre la station fixe 6 et les satellites (les pseudo-ranges).

La transmission au serveur 5 peut se faire soit par réseau filaire 4, par exemple par Internet, soit par réseau radio. Afin de mettre à profit les stations fixes déjà en place sur un territoire donné, il est aussi possible d'utiliser des stations de relais captant les informations différentielles transmises par RDS par des stations fixes et de les retransmettre au serveur 5.

Le serveur 5 reçoit les données différentielles, préférablement de plusieurs stations fixes. De préférence, les stations fixes sont réparties de façon à couvrir une partie importante du territoire à servir. La précision étant plus nécessaire dans les villes, les stations seront installées dans celles-ci en priorité.

Pour chaque terminal mobile 1,2, le serveur 5 détermine sa position. Ici la précision n'est pas importante, il s'agit simplement de déterminer dans quelle zone géographique se trouve le terminal mobile 1,2. Une simple connaissance de l'itinéraire peut être suffisante. Le serveur 5 détermine alors la station fixe la plus proche du terminal mobile 1,2 et évalue si elle se trouve suffisamment proche du terminal mobile 1,2 pour justifier l'envoi de données différentielles correctives. Si c'est le cas, les données sont transmises au terminal mobile 1,2 avec l'heure précise où ces données ont été mesurées. De préférence, les données sont transférées à intervalles réguliers, par exemple à toutes les 10 ou 30 secondes.

Les données différentielles seront préférablement codées selon le standard RTCM-SC-104 (Radio Technical Commission for Maritime Services, Special Committee 104), et transmises du serveur 5 au terminal mobile 1,2 en utilisant le même réseau de transmission que celui utilisé pour les précédents échanges entre le terminal mobile 1,2 et le serveur 5.

Ici, la transmission se fait en utilisant des messages courts SMS sur le même réseau GSM, les messages étant reçus directement par le microcontrôleur 16 qui a échangé avec le téléphone les commandes nécessaires pour se mettre en mode d'interception des messages SMS transmis au téléphone portable, selon le protocole décrit dans la norme GSM 07.05 de l'European Telecommunication Standards Institute (ETSI), par une liaison série utilisant le connecteur 11 et relié au connecteur 10 du téléphone portable. La fréquence de transfert des données différentielles transmises par le serveur 5 au terminal mobile 1,2 peut être réduite en transmettant non seulement les corrections pseudo-ranges (PRC) mais également les corrections dites range rate corrections (RRC). En utilisant ces dernières, les erreurs cumulées sur le récepteur mobile sont de l'ordre de 1,5 mètres après 30 secondes.

Le microcontrôleur 16 reconvertit les données SMS en format RTCM-SC-104 avant de les transmettre au récepteur GPS 19 en utilisant une liaison série dédiée à cet effet. La plupart des récepteurs GPS disponibles sur le marché intègrent cette fonctionnalité. Le récepteur GPS 19 du terminal mobile 1,2 communique régulièrement, par exemple à toutes les secondes, sa position, éventuellement corrigée par les données différentielles, au microcontrôleur 16 par une autre liaison série à 4800 bauds selon le protocole ASCII NMEA-0183. A chaque requête de position provenant du programme de guidage résident sur le téléphone 1, le microcontrôleur 16 transmet la position.

Le type de téléphone est préférablement un téléphone intelligent (smart phone) avec grand écran incorporant les fonctionnalités d'un agenda électronique, et possède préférablement une machine virtuelle Java. Le programme d'aide à la navigation est préférablement écrit en Java de Sun et est résident sur le téléphone, ce qui permet d'écrire un seul programme compatible avec plusieurs téléphones. Il peut aussi avoir été installé à l'usine. De préférence lors d'au moins un des échanges avec le serveur 5, le téléphone 1 communiquera le numéro de version de son programme d'aide à la navigation au serveur 5 qui vérifiera s'il s'agit bien de la demière version. Dans le cas contraire, le serveur 5 enverra un message au téléphone 1 pour lui indiquer qu'une nouvelle version est disponible. Le téléphone affichera alors un message et proposera à l'utilisateur de mettre à jour son programme d'aide à la navigation. Si celui-ci accepte, le serveur 5 transmettra alors le nouveau programme au téléphone 1. Ceci est donné à titre d'exemple, d'autres types de téléphone et d'autres systèmes d'exploitation et/ou de langage pouvant être utilisés, par exemple des téléphones intégrant un agenda électronique de type WinCE de Microsoft.

Selon un autre mode de réalisation préféré, le terminal mobile 1,2 est constitué d'un agenda électronique de type PalmPilot de 3COM et comprend un récepteur GPS et un module de communication GSM. Le module de réception GPS et le module GSM sont intégrés dans un même bloc comprenant également un microcontrôleur 16, un convertisseur numérique analogique 21 et un haut-parleur 23. Le module GPS et GSM est amovible et comprend un socle 9 permettant de le connecter à l'agenda électronique. L'entrée des données se fait en utilisant un stylet. Le programme de guidage embarqué est résident sur l'agenda électronique. Ceci étant donné à titre d'exemple, d'autres types d'agenda électronique pouvant être utilisés, par exemple des agendas électronique Psion.

Selon un autre mode de réalisation pouvant être commun aux modes précédents, le terminal mobile 1,2 communique régulièrement sa position, et éventuellement sa vitesse, au serveur 5. Celui-ci stocke cette information et peut s'en servir pour mettre à jour ses données concernant l'état des routes, mais aussi pour répondre éventuellement à une requête d'un terminal autre que le terminal mobile 1,2 d'où provient la position. Ceci permet d'offrir des services de localisation et de suivi de véhicule et de gestion de flottes de véhicules.

Bien que l'invention ait été décrite à l'aide des modes de réalisation préférés, il est clair pour les spécialistes que plusieurs modifications dans la forme et les détails peuvent être faites sans départir de la portée et de l'esprit de cette invention. En particulier ce système décrit peut aussi être utilisé pour le guidage automatique d'un véhicule sans conducteur, pour le guidage d'avion, de bateaux, ou de piétons ; ce système peut également être employé sur d'autres types de terminaux, par exemple un appareil pré-installé dans le véhicule, intégré à l'autoradio, à un ordinateur de bord ou à un chronotachygraphe; de plus, le capteur de positionnement et toutes les unités de traitement peuvent être intégrées dans l'appareil téléphonique. De plus, le serveur 5 décrit peut être constitué en fait de plusieurs serveurs, ceux-ci étant distribués pour se diviser le travail en fonction de contraintes géographiques ou de capacités de calculs. Ces serveurs n'ont pas non plus nécessairement toutes les données directement accessibles. Certaines données peuvent se situer sur d'autres serveurs, un moyen de communication existant alors entre eux, par exemple grâce à Internet.

## Revendications

1. Procédé d'aide interactive en temps réel à la navigation selon lequel un terminal mobile (1, 2), possédant des moyens de positionnement (18, 19), transmet par la voie d'un réseau sans fil une interrogation d'itinéraire à un serveur fixe (5) qui transmet en réponse au terminal mobile (1, 2), par le même réseau, des données d'itinéraire, **caractérisé en ce que** le serveur fixe (5) est un serveur centralisé, les données d'itinéraires contiennent les latitudes et longitudes d'au moins une des extrémités des segments de droite ou d'arc formant l'itinéraire, **en ce que** le terminal mobile (1, 2) élabore en temps réel des messages de guidage en fonction de la position du terminal mobile (1, 2) par rapport aux données d'itinéraire reçues du serveur (5), **en ce que** le serveur (5) transmet également dans sa réponse au terminal mobile (1, 2) des données concernant les routes formant une intersection avec l'itinéraire, **en ce que** le serveur (5) transmet également dans sa réponse au terminal mobile (1, 2) des données concernant une zone de proximité entourant l'itinéraire, **en ce que**, si le terminal mobile (1, 2) dévie de l'itinéraire en empruntant une des intersections, le terminal mobile (1, 2) obtient sans connexion supplémentaire au serveur (5) un nouvel itinéraire en fonction de sa position et des données de la zone de proximité et émet des messages de guidage en conséquence et **en ce que**, si le terminal mobile (1, 2) sort de la zone de proximité, le terminal mobile (1, 2) transmet automatiquement une nouvelle interrogation d'itinéraire au serveur (5), l'interrogation comprenant en outre des données concernant la position du terminal mobile (1, 2).

2. Procédé selon la revendication 1, **caractérisé en ce que** le serveur (5) conserve en mémoire l'itinéraire et/ou la zone de proximité transmise au terminal mobile (1, 2), **en ce que** le serveur (5) reçoit en temps réel des informations sur le trafic et/ou la météo, **en ce que**, le serveur (5) évalue si ces certaines de ces informations concernent des segments faisant parti de l'itinéraire ou de la zone de proximité, **en ce que**, en cas d'incident affectant l'itinéraire, le serveur (5) évalue la possibilité d'un itinéraire plus avantageux, et **en ce que** le serveur (5) communique avec le terminal mobile (1, 2) pour lui envoyer des données concernant l'incident et, le cas échéant, un nouvel itinéraire.

3. Procédé selon l'une quelconque des revendications 1 à 2, **caractérisé en ce que** les données d'itinéraire envoyées par le serveur (5) comportent des visualisations des endroits de l'itinéraire où il y a un choix à faire, et **en ce que** ces visualisations correspondent à la vue que peut en avoir une personne se dirigeant vers ces endroits en empruntant l'itinéraire.

4. Procédé selon l'une quelconque des revendications 1 à 3 **caractérisé en ce que** le serveur (5) transmet des données concernant des informations générales sur l'itinéraire telles que stations-service, restaurants, hôtels ou données touristiques.

5. Procédé selon l'une quelconque des revendications 1 à 4, **caractérisé en ce que** les messages de guidage et/ou d'informations générales émis par le terminal mobile (1, 2) sont sous forme sonore.

6. Procédé selon la revendication 5, **caractérisé en ce qu'**une partie au moins des messages sonores sont élaborés par le serveur (5) qui les transmet au terminal mobile (1, 2) sous forme audio numérique, **en ce que** le terminal mobile (1, 2) stocke les messages sonores, et **en ce que** le terminal mobile (1, 2) diffuse, au moment opportun en fonction de sa position, ces messages sonores stockés, tels quels ou combinés entre eux.

7. Procédé selon l'une quelconque des revendications 1 à 6, **caractérisé en ce que** les interrogations sont formulées sous forme vocale.

8. Procédé selon la revendication 7 **caractérisé en ce que** le terminal mobile (1, 2) numérise une interrogation vocale, **en ce que** le terminal mobile (1, 2) en extrait des paramètres d'analyse, **en ce que** le terminal mobile (1, 2) transmet sa position et les paramètres d'analyse au serveur (5), **en ce que** le serveur (5) effectue une reconnaissance automatique de l'interrogatoire vocale à partir des paramètres d'analyse transmis, **en ce que** le serveur (5) détermine l'objet de l'interrogation à la suite de la reconnaissance vocale et de la position du terminal mobile (1, 2), et **en ce que** le serveur (5) transmet sa réponse au terminal mobile (1, 2).

9. Procédé selon l'une quelconque des revendications 1 à 8, **caractérisé en ce que** les moyens de positionnement du terminal mobile (1, 2) comprennent un récepteur de positionnement par satellites (18, 19), **en ce que** le serveur (5) obtient des informations différentielles de correction du système de positionnement par satellites d'au moins une station fixe (6) couvrant la zone d'opération du mobile, **en ce que** le serveur (5) transmet au terminal mobile (1, 2) ces informations différentielles, et **en ce que** la transmission s'effectue par le même réseau que celui utilisé pour les autres échanges de données entre le terminal mobile (1, 2) et le serveur (5).

10. Procédé selon la revendication 9 **caractérisé en ce que** le serveur (5) transmet au terminal mobile (1, 2) les informations différentielles de correction par messages courts SMS.

11. Procédé selon l'une des revendications 1 à 10, **caractérisé en ce que** le serveur (5) est un serveur (5) Internet.

12. Procédé selon l'une quelconque des revendications 1 à 11, **caractérisé en ce que** le terminal mobile (1, 2) transmet de façon régulière sa position au serveur (5), **en ce que** ces positions sont stockées par le serveur (5), **en ce qu'**au moins un terminal tiers communique avec le serveur (5) pour lui transmettre une requête concernant le terminal mobile (1, 2), et **en ce que** le serveur (5) répond en transférant des données cartographiques correspondant à au moins une des positions du terminal mobile (1, 2).

13. Procédé selon l'une quelconque des revendications 1 à 12 **caractérisé en ce que** le serveur (5) reçoit une demande de calcul d'itinéraire d'un terminal tiers, et **en ce que** le serveur (5) transmet au terminal mobile (1, 2) l'itinéraire demandé par le tiers.

14. Procédé selon l'une quelconque des revendications 1 à 13 **caractérisé en ce que** le serveur (5) transmet au terminal mobile (1, 2) un programme informatique lui permettant d'effectuer une des fonctions d'aide à la navigation, **en ce que** le terminal mobile (1, 2) stocke ce programme, et **en ce que** le terminal mobile (1, 2) exécute ce programme pour effectuer une fonction d'aide à la navigation.

15. Procédé selon l'une quelconque des revendications 1 à 14, **caractérisé en ce que** le terminal mobile (1, 2) utilise un unique réseau de communication radio pour la transmission des interrogations, pour la réception des réponses d'itinéraire, et pour la réception des informations correctives différentielles de positionnement par satellite.

16. Procédé selon la revendication 15, **caractérisé en ce que** le module de communication est un radio téléphone portable (1), **en ce que** le radio téléphone est connecté de façon amovible à un accessoire (2) fixé dans un véhicule, et **en ce que** l'accessoire (2) est connecté à ou intègre un récepteur de positionnement par satellite (19).

17. Procédé selon la revendication 16, **caractérisé en ce que** le radio téléphone (1) est portable, **en ce qu'**il est connecté à un accessoire (2) fixé dans un véhicule, et **en ce que** l'accessoire (2) est connecté ou intègre un microphone (23), un convertisseur analogique numérique (21) et les moyens d'extraction de paramètres d'analyse qui seront communiqués au téléphone (1) pour être transmis au serveur (5) pour effectuer une reconnaissance vocale.

18. Procédé selon l'une quelconque des revendications 1 à 14, **caractérisé en ce que** le terminal mobile (1, 2) est constitué d'un agenda électronique, d'un module de communication radio et d'un récepteur de positionnement par satellites, et **en ce qu'**au moins l'un ou l'autre du module de communication ou du récepteur de positionnement par satellites est un accessoire amovible.

## Patentansprüche

1. Verfahren zur interaktiven Navigationshilfe in Echtzeit, bei welchem ein mobiles Terminal (1, 2), das Positionsbestimmungseinrichtungen (18, 19) besitzt, über ein drahtloses Netz eine Fahrtroutenabfrage zu einem ortsfesten Server (5) überträgt, der als Antwort über dasselbe Netz zu dem beweglichen Terminal (1, 2) Fahrtroutendaten überträgt,
**dadurch gekennzeichnet,**
**daß** der ortsfeste Server (5) ein zentraler Server ist, daß die Fahrtroutendaten die geographischen Breiten und Längen von mindestens einem der Enden der die Fahrtroute bildenden Geraden- oder Bogensegmente enthalten,
**daß** das bewegliche Terminal (1, 2) in Abhängigkeit von der Position des beweglichen Terminals (1, 2) bezüglich der vom Server (5) empfangenen Fahrtroutendaten Führungsmitteilungen in Echtzeit erstellt,
**daß** der Server (5) in seiner Antwort an das bewegliche Terminal (1, 2) auch Daten überträgt, die die mit der Fahrtroute einen Schnittpunkt bildenden Straßen betreffen,
**daß** der Server (5) in seiner Antwort an das bewegliche Terminal (1, 2) ferner Daten überträgt, die einen die Fahrtroute umgebenden Nahbereich betreffen,
**daß** das bewegliche Terminal (1, 2), wenn es an einem der Schnittpunkte von der Fahrtroute abzweigt, ohne zusätzliche Verbindung mit dem Server (5) eine neue Fahrtroute in Abhängigkeit von seiner Position und von den Daten des Nahbereichs erhält und entsprechende Führungsmitteilungen sendet
und **daß** das bewegliche Terminal (1, 2), wenn es den Nahbereich verläßt, zu dem Server (5) automatisch eine neue Fahrtroutenabfrage überträgt, wobei die Abfrage außerdem die Position des beweglichen Terminals (1, 2) betreffende Daten enthält.

2. Verfahren nach Anspruch 1,
**dadurch gekennzeichnet,**
**daß** der Server (5) die Fahrtroute und/oder den Nahbereich, die zu dem beweglichen Terminal (1, 2) übertragen wurden, gespeichert hält,
**daß** der Server (5) Informationen über den Verkehr und/oder die Wettervorhersage in Echtzeit empfängt, daß der Server (5) ermittelt, ob einige dieser Informationen Segmente betreffen, die Teil der Fahrtroute oder des Nahbereichs sind,
**daß** der Server (5) im Fall eines die Fahrtroute betreffenden Unfalls die Möglichkeit einer vorteilhafteren Fahrtroute ermittelt
und **daß** der Server (5) mit dem beweglichen Terminal (1, 2) in Verbindung tritt, um ihm Daten zu senden, die den Unfall und ggf. eine neue Fahrtroute betreffen.

3. Verfahren nach einem der Ansprüche 1 bis 2,
**dadurch gekennzeichnet,**
**daß** die vom Server (5) gesendeten Fahrtroutendaten Sichtdarstellungen der Orte der Fahrtroute umfassen, an denen eine Wahl zu treffen ist,
und **daß** diese Sichtdarstellungen der Sicht entsprechen, die eine Person haben kann, die diese Orte auf der Fahrtroute anfährt.

4. Verfahren nach einem der Ansprüche 1 bis 3,
**dadurch gekennzeichnet,**
**daß** der Server (5) Daten überträgt, die allgemeine Informationen über die Fahrtroute betreffen, wie z.B. Servicestationen, Gaststätten, Hotels oder touristische Informationen.

5. Verfahren nach einem der Ansprüche 1 bis 4,
**dadurch gekennzeichnet,**
**daß** die Führungsmitteilungen und/oder Mitteilungen von allgemeinen Informationen von dem beweglichen Terminal (1, 2) in akustischer Form abgegeben werden.

6. Verfahren nach Anspruch 5,
**dadurch gekennzeichnet,**
**daß** zumindest ein Teil der akustischen Mitteilungen von dem Server (5) erstellt wird, der sie zu dem beweglichen Terminal (1, 2) in digitaler Audioform überträgt,
**daß** das bewegliche Terminal (1, 2) die akustischen Mitteilungen speichert,
und **daß** das bewegliche Terminal (1, 2) zum geeigneten Zeitpunkt in Abhängigkeit von seiner Position diese gespeicherten akustischen Mitteilungen so, wie sie sind, oder miteinander kombiniert abgibt.

7. Verfahren nach einem der Ansprüche 1 bis 6,
**dadurch gekennzeichnet,**
**daß** die Abfragen in gesprochener Form formuliert werden.

8. Verfahren nach Anspruch 7,
**dadurch gekennzeichnet,**
**daß** das bewegliche Terminal (1, 2) eine gesprochene Abfrage digitalisiert,
**daß** das bewegliche Terminal (1, 2) daraus Analyseparameter extrahiert,
**daß** das bewegliche Terminal (1, 2) seine Position und die Analyseparameter zu dem Server (5) überträgt,
**daß** der Server (5) eine automatische Erkennung der gesprochenen Abfrage aus den übertragenen Analyseparametern vornimmt,
**daß** der Server (5) nach der Spracherkennung und der Position des beweglichen Terminals (1, 2) den Gegenstand der Abfrage bestimmt
und **daß** der Server (5) seine Antwort zu dem beweglichen Terminal (1, 2) überträgt.

9. Verfahren nach einem der Ansprüche 1 bis 8,
**dadurch gekennzeichnet,**
**daß** die Einrichtungen zur Bestimmung der Position des beweglichen Terminals (1, 2) einen Satelliten-Positionsbestimmungsempfänger (18, 19) umfassen,
**daß** der Server (5) Differenzinformationen zur Korrektur des Satelliten-Positionsbestimmungssystems von mindestens einer ortsfesten Station (6) erhält, die den Operationsbereich des Fahrzeugs abdeckt,
**daß** der Server (5) diese Differenzinformationen zum beweglichen Terminal (1, 2) überträgt
und **daß** die Übertragung über dasselbe Netz stattfindet, das auch für den übrigen Datenaustausch zwischen dem beweglichen Terminal (1, 2) und dem Server (5) verwendet wird.

10. Verfahren nach Anspruch 9,
**dadurch gekennzeichnet,**
**daß** der Server (5) die Korrektur-Differenzinformationen zu dem beweglichen Terminal (1, 2) als SMS-Kurzmitteilungen überträgt.

11. Verfahren nach einem der Ansprüche 1 bis 10,
**dadurch gekennzeichnet,**
**daß** der Server (5) ein Internet-Server (5) ist.

12. Verfahren nach einem der Ansprüche 1 bis 11,
**dadurch gekennzeichnet,**
**daß** das bewegliche Terminal (1, 2) zu dem Server (5) regelmäßig seine Position überträgt,
**daß** diese Positionen vom Server (5) gespeichert werden,
**daß** mindestens ein drittes Terminal mit dem Server (5) kommuniziert, um zu ihm eine das bewegliche Terminal (1, 2) betreffende Anfrage zu übertragen,
und **daß** der Server (5) antwortet, indem er kartographische Daten überträgt, die mindestens einer der Positionen des beweglichen Terminals (1, 2) entsprechen.

13. Verfahren nach einem der Ansprüche 1 bis 12,
**dadurch gekennzeichnet,**
**daß** der Server (5) eine Anfrage für eine Fahrtroutenberechnung von einem dritten Terminal empfängt
und **daß** der Server (5) die von dem Dritten angeforderte Fahrtroute zu dem beweglichen Terminal (1, 2) überträgt.

14. Verfahren nach einem der Ansprüche 1 bis 13,
**dadurch gekennzeichnet,**
**daß** der Server (5) zu dem beweglichen Terminal (1, 2) ein Informationsprogramm überträgt, das ihm die Durchführung einer der Navigationshilfefunktionen gestattet,
**daß** das bewegliche Terminal (1, 2) dieses Programm speichert
und **daß** das bewegliche Terminal (1, 2) dieses Programm ausführt, um eine Navigationshilfefunktion durchzuführen.

15. Verfahren nach einem der Ansprüche 1 bis 14,
**dadurch gekennzeichnet,**
**daß** das bewegliche Terminal (1, 2) für die Übertragung der Abfragen, für den Empfang der Fahrtroutenantworten und für den Empfang der Differenzinformationen zur Korrektur der Satelliten-Positionsbestimmung ein einziges Funkkommunikationsnetz verwendet.

16. Verfahren nach Anspruch 15,
**dadurch gekennzeichnet,**
**daß** das Kommunikationsmodul ein tragbares Funktelefon (1) ist,
**daß** das Funktelefon an einem in einem Fahrzeug befestigten Zubehör (2) lösbar angeschlossen wird
und **daß** das Zubehör (2) an einen Satelliten-Positionsbestimmungsempfänger (19) angeschlossen ist oder dieser darin integriert ist.

17. Verfahren nach Anspruch 16,
**dadurch gekennzeichnet,**
**daß** das Funktelefon (1) tragbar ist,
**daß** es an ein in einem Fahrzeug befestigtes Zubehör (2) angeschlossen ist
und **daß** das Zubehör (2) an ein Mikrophon (23), an einen Analog-Digital-Wandler (21) und an eine Einrichtung zur Extraktion von Analyseparametern, die dem Telefon mitgeteilt werden, um zur Durchführung einer Spracherkennung zu dem Server (5) übertragen zu werden, angeschlossen ist oder diese in das Zubehör integriert sind.

18. Verfahren nach einem der Ansprüche 1 bis 14,
**dadurch gekennzeichnet,**
**daß** das bewegliche Terminal (1, 2) aus einer elektronischen Agenda, einem Funkkommunikationsmodul und einem Satelliten-Positionsbestimmungsempfänger besteht und daß mindestens das eine oder das andere der aus dem Kommunikationsmodul und dem Satelliten-Positionsbestimmungsempfänger bestehenden Bauteile ein abnehmbares Zubehör ist.

## Claims

1. Interactive process for use as a real-time navigational aid by which a mobile terminal (1, 2), with means of positioning (18, 19) transmits, through a wireless network, itinerary requests to a fixed server (5) which transmits, in answer to the mobile terminal (1, 2) and using the same network, itinerary date, **characterized by** the fact that the fixed server (5), is a centralized server, the itinerary data comprise the latitudes and longitudes of at least one extremities of the straight line or arc segments forming the itinerary; by the fact that the mobile terminal (1, 2) develops real-time guidance messages according to the position of the mobile terminal (1, 2) compared to the itineraries received by the server (5); by the fact that, when answering the mobile terminal (1, 2), the server (5) also transmits data concerning the roads intersecting with the itinerary; by the fact that, when answering the mobile terminal (1, 2) the server (5) also transmits data concerning a proximity area around the itinerary; by the fact that if the mobile terminal (1, 2) deviates from the itinerary by taking one the intersections, the mobile terminal (1, 2) obtains, without any additional connection to the server (5), a new itinerary according to its position and the data of the proximity area and transmits guidance messages to this effect; and by the fact that if the mobile terminal (1, 2) leaves the proximity area, the mobile terminal (1, 2) automatically transmits a new itinerary request to the server (5), a request which also includes data concerning the position of the mobile terminal (1, 2).

2. Process according to claim 1, **characterized by** the fact that the server (5) saves in its memory the itinerary and/or proximity area transmitted to the mobile terminal (1, 2); by the fact that the server (5) receives real-time information on the traffic and/or weather conditions; by the fact that the server (5) verifies if some of this information concern segments which are part of the itinerary or the proximity area; by the fact that, in the event of an incident affecting the itinerary, the server (5) estimates the possibility of a more advantageous itinerary; and by the fact that the server (5) communicates with the mobile terminal (1, 2) in order to transmit data on the incident and, if necessary, a new itinerary.

3. Process according to any of the claims 1 and 2, **characterized by** the fact that the itinerary data sent by the server (5) comprise displays of the places in the itinerary where a choice has to be made, and by the fact that the displays are similar to the view a person can have of these places when driving towards them while following the itinerary.

4. Process according to any of the claims 1 to 3, **characterized by** the fact that the server (5) transmits data concerning general information on the itinerary such as gas stations, restaurants, hotels or tourist data.

5. Process according to any of the claims 1 to 4, **characterized by** the fact that the guidance messages and/or general information transmitted by the mobile terminal (1, 2) are made in sound form.

6. Process according to claim 5, **characterized by** the fact that at least one part of the sound messages are developed by the server (5) which transmits them to the mobile terminal (1, 2) in digital audio form; by the fact that the mobile terminal (1, 2) stores the sound messages, and by the fact that the mobile terminal (1, 2) transmits, at an appropriate time according to its position, the sound messages already stored, either as is or in combination.

7. Process according to any of the claims 1 to 6, **characterized by** the fact that the requests are formulated in voice form.

8. Process according to claim 7, **characterized by** the fact that the mobile terminal (1, 2) digitizes the voice requests; by the fact that the mobile terminal (1, 2) extracts analysis parameters from them; by the fact that the mobile terminal transmits its position and the analysis parameters to the server (5); by the fact that the server (5) proceeds to an automatic recognition of the voice requests based on the analysis parameters transmitted; by the fact that the server (5) determines the nature of the requests based on voice recognition and the position of the mobile terminal (1, 2) and by the fact that the server (5) transmits its answer to the mobile terminal (1, 2).

9. Process according to any of the claims 1 to 8, **characterized by** the fact that the means of positioning of the mobile terminal (1, 2) comprise a satellites positioning receiver (18, 19); by the fact that the server (5) obtains differential information for correcting the satellites positioning system from at least one fixed station (6) covering the operating area of the mobile terminal (1, 2); by the fact that the server (5) transmits differential information to the mobile terminal (1, 2), and by the fact that transmission is executed through the same network used for the other data exchanges between the mobile terminal (1, 2) and the server (5).

10. Process according to claim 9, **characterized by** the fact that the server (5) uses SMS short messages to transmit corrective differential information to the mobile terminal (1, 2).

11. Fixed server (5) for implementing any of the claims 1 to 10, **characterized by** the fact that the server (5) is an Internet server (5).

12. Process according to any of the claims 1 to 11, **characterized by** the fact that the mobile terminal (1, 2) transmits its position to the server (5) on a regular basis; by the fact that the positions are stored by the server (5); by the fact that at least one third party terminal communicates with the server (5) to transmit requests concerning the mobile terminal (1, 2) and by the fact that the server (5) answers by transferring cartographic data corresponding to at least one of the positions of the mobile terminal (1, 2).

13. Process according to any of the claims 1 to 12, **characterized by** the fact that the server (5) receives a request for the calculation of an itinerary from a third party terminal and by the fact that the server (5) transmits the itinerary requested by the third party to the mobile terminal (1, 2).

14. Process according to any of the claims 1 to 13, **characterized by** the fact that the server (5) transmits to the mobile terminal (1, 2), a computer program through which it can execute navigational aid functions; by the fact that the mobile terminal (1, 2) stores the program and by the fact that the mobile terminal (1, 2) executes the program for performing navigational aid functions.

15. Process according to any of the claims 1 to 14, **characterized by** the fact that the mobile terminal (1, 2) is using a single radio communication network for transmitting requests, for receiving itineraries answers and for receiving corrective differential information of satellites positioning.

16. Process according to claim 15, **characterized by** the fact that the communication module is a portable radiotelephone (1); by the fact that the radiotelephone is connected in a removable way to an accessory (2) fixed inside a vehicle, and by the fact that the accessory (2) is connected to or integrates a satellites positioning receiver (19).

17. Process according to claim 16, **characterized by** the fact that the radiotelephone (1) is portable; by the fact that it is connected to an accessory (2) fixed inside a vehicle; by the fact that the accessory (2) is connected or integrates a microphone (23), a digital-to-analog converter (21) and the means for extracting the analysis parameters to be passed on to the telephone (1) for transmission to the server (5) in view of a voice recognition operation.

18. Process according to any of the claims 1 to 14, **characterized by** the fact that the mobile terminal (1, 2) is formed of an electronic organizer, of a radio communication module and a satellites positioning receiver and by the fa-ct that, of the communications module and the satellites positioning receiver, at least one or the other is a removable accessory.
